# EUROPÄISCHE PATENTANMELDUNG

(11) **EP 2 116 464 A2**
(43) Veröffentlichungstag der Anmeldung: **11.11.2009**
(21) Anmeldenummer: 09159217.0
(22) Anmeldetag: 30.04.2009
(51) Int. Cl.: B62J 9/00

(54) **Motorradtasche**

(30) Priorität: 10.05.2008 DE 202008006479 U
(71) Anmelder: POLO EXPRESSVERSAND Gesellschaft für Motorradbekleidung und Sportswear mbH, 40589 Düsseldorf (DE)
(72) Erfinder: Meixner, Thomas, 88250 Weingarten (DE); Beyer, Arno, 88212 Ravensburg (DE); Zass, Rene, 40764 Langenfeld (DE); Evers, Marco, 41812 Erkelenz (DE)
(74) Vertreter: Kluin, Jörg-Eden

(57) **Zusammenfassung**

Bei der Motorradtasche (100), mit einem zu öffnenden Deckel (1), und mit einem Verschlusssystem für den Deckel, sind in dem Verschlusssystem magnetisch wirkende Mittel, die mit mindestens einem Reißverschluss (4) zusammenwirken, vorgesehen, so dass der Deckel (1) durch die magnetisch wirkenden Mittel in einen ersten Verschlusszustand bringbar ist, in welchem sich die beiden Bänder (4a, 4b; 4'a, 4'b) des mindestens einen Reißverschlusses (2) exakt oder nahezu exakt in Schließposition gegenüberliegen.

## Beschreibung

Die Erfindung betrifft eine Motorradtasche mit zu öffnendem Deckel und mit einem Verschlusssystem für den Deckel, die je nach Ausführung sowohl zur Montage auf dem Tank, als auch zur Montage am Heck eines Motorrads geeignet ist.

Unter einem Motorrad soll im Rahmen dieser Druckschrift jedes Kraftrad verstanden werden, unabhängig von Motorleistung oder sonstiger Bauart.

Mit einem Deckel ist im Rahmen dieser Druckschrift jede Abdeckung gemeint, die nach Öffnen den Zugang zu dem Inneren der Motorradtasche freigibt, unabhängig davon, ob die Abdeckung oben auf der Motorradtasche oder an anderer Stelle angeordnet ist und unabhängig davon, ob sie eine gewisse Steifigkeit aufweist oder etwa rollbar ist.

Derartige Motorradtaschen sind beispielsweise aus der US 6,305,590 B1 bekannt und weit verbreitet. Der Nachteil dieser Motorradtaschen ist, dass das Wiederverschließen der geöffneten Motorradtasche einige Zeit und Aufmerksamkeit in Anspruch nimmt.

Die Erfindung hat es sich daher zur Aufgabe gemacht, eine Motorradtasche mit zu öffnendem Deckel zu schaffen, die äußerst schnell, leicht und dennoch sicher wiederverschließbar ist.

Diese Aufgabe wird durch die in Anspruch 1 wiedergegebene Erfindung gelöst.

Das Verschlusssystem des Deckels der erfindungsgemäßen Motorradtasche kombiniert mindestens einen Reißverschluss mit magnetisch wirkenden Mitteln. Diese magnetisch wirkenden Mittel sind so angeordnet, dass der Deckel durch sie in einen ersten Verschlusszustand bringbar ist. In diesem ersten Verschlusszustand befinden sich die magnetisch wirkenden Mittel des Verschlusssystems in Wirkverbindung und der Deckel ist bereits exakt oder nahezu exakt in seiner endgültigen Verschlussposition, so dass sich die beiden Bänder des mindestens einen Reißverschlusses exakt oder nahezu exakt in Schließposition gegenüberliegen und ohne weitere vorherige Justierung des Deckels relativ zur Motorradtasche zum Erreichen des endgültigen Verschlusszustandes verschließbar sind. Die Positionierung des Deckels ist also zumindest so korrekt, dass eine etwaige geringfügige Schieflage des Deckels das Schließen des mindestens einen Reißverschlusses nicht behindert, sondern automatisch hierdurch behoben wird. Auf diese Weise kombiniert die erfindungsgemäße Motorradtasche die Vorteile eines Magnetverschlusses (Schnelligkeit, Selbsttätigkeit) mit denen eines Reißverschlusses (Sicherheit, Zuverlässigkeit, Lückenlosigkeit, mögliche Wasserdichtigkeit). Der Magnetverschluss erfüllt hierbei zwei Funktionen: Zum einen beschleunigt er das endgültige Schließen mittels Reißverschluss, in dem er das korrekte Schließen des Deckels vereinfacht und den Deckel bereits in der endgültigen Verschlussposition hält. Zum anderen führt er äußerst schnell einen ersten Verschlusszustand herbei, bei dem die Inhalte der Motorradtasche bereits weitgehend gesichert sind. Dies ermöglicht es dem Nutzer beispielsweise, die Tasche bei einem Ampel - Stopp im Stadtverkehr zu öffnen, einen Gegenstand, wie etwa eine Sonnenbrille, herauszunehmen und die Tasche zunächst in den ersten Verschlusszustand zu bringen, bevor er sie, etwa bei dem nächsten Ampel - Stopp, mittels des mindestens einen Reißverschlusses endgültig schließt.

Die erfindungsgemäße Motorradtasche ist durch an sich bekannte Mittel wie Zurrgurte und mit dem ferromagnetischen Material des Tanks zusammenwirkende Permanentmagnete an dem Motorrad befestigt.

Besonders bevorzugt ist es, wenn zur Ausbildung der magnetisch wirkenden Mittel des Verschlusssystems des Deckels an dem Deckel und/oder an der Motorradtasche mindestens ein Permanentmagnet vorgesehen ist, welcher mit einem an der Motorradtasche und/oder an dem Deckel vorgesehenen ferromagnetischen Material oder einem Permanentmagneten umgekehrter Polung in Wirkverbindung bringbar ist. Versuche haben gezeigt, dass selbst bei relativ kleinvolumigen Permanentmagneten in dem Verschlusssystem des Deckels und selbst dann, wenn sie lediglich mit ferromagnetischem Material in Wirkverbindung zu bringen sind, ausreichende Haltekräfte zum Erreichen eines ersten Verschlusszustandes erzielbar sind, die selbst bei zumindest gemäßigtem Fahrtwind ein selbsttätiges Öffnen des sich lediglich in dem ersten Verschlusszustand befindlichen Deckels verhindern. Um die Haltekräfte zu erhöhen, kann vorgesehen sein, dass die Permanentmagnete anstelle von ferromagnetischem Material mit weiteren Permanentmagneten zusammenwirken, die ihnen mit ungleichnamigen Polen zugewandt sind.

Vorzugsweise umfasst die Motorradtasche mindestens eine in den durch den Deckel abdeckbaren Bereich der Motorradtasche hineinragende Lasche, die jeweils mindestens einen Permanentmagneten oder ferromagnetisches Material umfasst. Auf diese Weise können die Permanentmagnete oder das ferromagnetische Material dauerhaft genau an der Motorradtasche positioniert werden. Zudem muss der Deckel die Öffnung nicht überlappen, sondern die Ränder des Deckels können im geschlossenen Zustand auf einer Höhe mit den Rändern der Öffnung der Motorradtasche positioniert sein, was das einfache Anbringen und Verschließen des mindestens einen Reißverschlusses begünstigt. Gleichzeitig entsteht durch diese Lasche eine Art Dichtlippe, die dem Eindringen von Feuchtigkeit und dem Herausfallen kleiner Gegenstände entgegenwirkt. Alternativ zu dieser Anordnung können die Permanentmagnete oder das ferromagnetische Material an den Rändern der Ausnehmung der Motorradtasche angeordnet sein und der Deckel kann diese überlappen.

Vorzugsweise ist der Deckel mit einem Rand scharniergelenkig - besonders bevorzugt einstückig - mit der Motorradtasche verbunden und über diesen Rand aufklappbar. Hierdurch ist der Deckel unverlierbar an der Motorradtasche gesichert. Vorzugsweise ist dieser Rand bei ordnungsgemäßer Montage der Motorradtasche auf dem Motorrad vorne. Bereits hierdurch wird ein ungewolltes Öffnen des Deckels durch den Fahrtwind äußerst unwahrscheinlich.

Es ist jedoch auch denkbar, diesen Rand des Deckels an anderer Stelle anzuordnen, so dass sich beispielsweise eine seitliche Aufklappbarkeit ergibt. Vor allem bei hinter dem Fahrer zu befestigenden Motorradtaschen ist zur besseren Erreichbarkeit und aufgrund der geringeren Gefahr, die dann von einem sich während der Fahrt ungewollt öffnenden Deckel ausgeht, auch eine Aufklappbarkeit nach vorne denkbar.

Vorzugsweise sind Mittel zur Versteifung des Deckels vorgesehen. Hierdurch wird begünstigt, dass der Deckel nach dem Schließen stets vollumfänglich die korrekte Verschlussposition einnimmt, (in der er von den magnetischen Mitteln gehalten wird). Die Mittel können eine vollflächige Versteifung des Deckels durch die Verwendung von im Vergleich zu gewöhnlichem Textilmaterial steiferem Material oder/und mehrlagigem Material, etwa einer Materialkombination aus textilem Material mit einer Innenschicht aus einem dünnen, aufgeschäumten Material umfassen. Der Deckel kann auch durch einen umlaufenden Rahmen aus Kunststoff oder Metall versteift sein. Vorzugsweise weist das Material auch im Bereich des Übergangs von Deckel zu Tasche, in dem es bei dem Aufklappen des Deckels geknickt wird, eine erhöhte Steifigkeit oder Versteifungen der oben beschriebenen Art auf. In Kombination mit einem steifen Deckel wird hierdurch das weitgehend selbsttätige, korrekte Schließen des Deckels erreicht.

Vorzugsweise weist auch das Material der übrigen Motorradtasche eine gewisse Steifigkeit auf. Hierdurch wird ein Flattern bei hohen Geschwindigkeiten vermieden. Zudem führt diese Materialbeschaffenheit dazu, dass eine Formstabilität der Tasche selbsttragend, das heißt ohne stützenden Rahmen oder Ähnliches gegeben ist.

Vorzugsweise befindet sich das Endstück des mindestens einen Reißverschlusses im Bereich des mit der Motorradtasche verbundenen Randes des Deckels. Hierdurch wird erreicht, dass die beiden Bänder des Reißverschlusses bei dem Öffnen nicht vollständig getrennt und daher auch nicht wieder eingefädelt werden müssen, wenn der Deckel geschlossen wird.

Vorzugsweise weist das Verschlusssystem zwei an gegenüberliegenden Seiten des Deckels angeordnete Reißverschlüsse auf. Die beiden gegenüberliegenden Seiten grenzen vorzugsweise jeweils an der Seite an, an der der Deckel scharniergelenkig mit der Motorradtasche verbunden ist. Auf diese Weise ergibt sich bei einem etwa viereckigen Deckel nach Verschließen der beiden Reißverschlüsse ein äußerst belastbarer endgültiger Verschlusszustand des Deckels.

An allen oder an einzelnen Seiten des Deckels können nur ein Magnetverschluss, nur ein Reißverschluss oder beide Verschlussarten vorgesehen sein.

Vorzugsweise ist an einer Seite des Deckels ausschließlich ein Magnetverschluss vorgesehen und diese Seite befindet sich an der gegenüber der scharniergelenkig mit der Motorradtasche verbundenen Seite. Das ferromagnetische Material und der mindestens eine Permanentmagnet oder nur mindestens zwei Permanentmagnete sind also gegenüber der scharniergelenkig mit der Motorradtasche verbundenen Seite des Deckels an diesem und an der Motorradtasche angeordnet. Hierdurch ergibt sich schon bei nur einer mit magnetisch wirkenden Mitteln ausgestatteten Seite des Deckels ein weitreichend belastbarer erster Verschlusszustand des Deckels. In Verbindung mit der oben erläuterten bevorzugten Anordnung der scharniergelenkig befestigten Seite in Fahrtrichtung, befindet sich der Magnetverschluss in der bevorzugten Ausführung also hinten. Dies führt auch dazu, dass diese gegebenenfalls weniger feuchtigkeitsresistente Seite weniger stark dem Regen ausgesetzt ist.

Vorzugsweise sind das ferromagnetische Material und/oder der mindestens eine Permanentmagnet an einem Bereich des Deckels und der Motorradtasche vorgesehen, der bei ordnungsgemäßer Montage der Motorradtasche auf dem Motorrad und bei geschlossenem Deckel nahezu senkrecht ist. Auch hierdurch wird dem Feuchtigkeitseintritt bei Regen entgegengewirkt.

In einer Ausführungsform weist die Motorradtasche ein Befestigungssystem zum übereinander Anordnen mehrerer Motorradtaschen auf, welches Mittel vorsieht, um die Motorradtaschen an einer Seite scharnierartig miteinander zu befestigen. Hierdurch kann die obere Motorradtasche zum Erreichen der unteren Motorradtasche aufgeklappt werden.

In der bevorzugten Ausführungsform weist die scharnierartige Befestigung mindestens einen Gurt auf, der mit einem Ende an einer Motorradtasche unlösbar befestigt ist und an dem anderen Ende eine Schließe aufweist, die mit einer an der anderen Motorradtasche unlösbar verbundenen komplementären Schließe lösbar in Eingriff zu bringen ist. Die derartige scharnierartige Befestigung ist besonders einfach und zuverlässig und kann einfach vollständig gelöst werden.

Vorzugsweise weist das Befestigungssystem auf der der scharnierartigen Befestigung gegenüberliegenden Seite der Taschen magnetisch wirkende Mittel auf. Die magnetisch wirkenden Mittel umfassen vorzugsweise Permanentmagnete und sind so angeordnet, dass sie bei korrekter Montage der Motorradtaschen aufeinander und auf dem Motorrad nicht in Fahrtrichtung weisen. Das derartige Befestigungssystem weist bei einfacher Herstellung und komfortabler Bedienung eine hohe Zuverlässigkeit und Festigkeit auf. In der Ausführungsform, in der die Motorradtaschen auf dem Tank montiert werden und die magnetischen Mittel des Befestigungssystems - wie besonders bevorzugt - die Taschen an ihrer hinteren Seite aufeinander befestigen, hat diese Ausführungsform den weiteren Vorteil, dass sich in unmittelbarer Nähe zum Fahrer keine potentiell störenden Schnallen oder Klettverschlüsse eines Befestigungssystems befinden. Der Magnetverschluss ist zudem von außen kaum zu erkennen, was einem klaren, ansprechenden Erscheinungsbild der Motorradtasche zugute kommt.

In der bevorzugten Ausführungsform umfassen die magnetisch wirkenden Mittel des Befestigungssystems Permanentmagnete und/oder ferromagnetisches Material, wie bereits in Zusammenhang mit den magnetisch wirkenden Mitteln des Verschlusssystems des Deckels der Motorradtasche beschrieben.

In einer Ausführungsform wirken die Permanentmagnete oder das ferromagnetische Material des Befestigungssystems mit den Permanentmagneten oder dem ferromagnetischen Material des Verschlusssystems zusammen.

Vorzugsweise sind sowohl das Material, als auch die Reißverschlüsse der Motorradtasche wasserdicht und alle Nähte der Motorradtasche von innen wasserdicht hinterklebt.

Anstelle der beschriebenen punktuellen Anordnung der magnetischen Mittel können die Permanentmagnete und/oder das ferromagnetische Material des Verschlusssystems auch über die gesamte Länge eines Dichtungsstreifens angeordnet sein, der sich seinerseits über die gesamte Länge einer Seite des Deckels erstreckt und vollflächig mit einem komplementären Dichtungsstreifen an der Motorradtasche mit gegenpolig angeordneten Permanentmagneten oder ferromagnetischem Material in Wirkverbindung bringbar ist. Hieraus kann eine weitere Verbesserung der Feuchtigkeitsresistenz und der Belastbarkeit des ersten Verschlusszustandes resultieren.

Die Gurte des Systems zur Befestigung mehrerer Taschen übereinander können elastisch sein.

Die Motorradtasche kann eine Aufnahme für ein Navigationsgerät aufweisen.

Die Permanentmagnete oder das ferromagnetische Material können zwischen zwei vorzugsweise elastischen Gurtbändern eingenäht sein, die ihrerseits mit der Motorradtasche fest verbunden sind. Dies bietet sich besonders bei dem Befestigungssystem der Motorradtaschen aufeinander an, da hierdurch eine gute Wirkverbindung der magnetisch wirkenden Mittel erreicht wird, auch ohne präzise Positionierung der beiden Taschen aufeinander.

In den Zeichnungen ist ein Ausführungsbeispiel einer erfindungsgemäßen Motorradtasche schematisch dargestellt. Es zeigen:
- Fig. 1: dieses Ausführungsbeispiel der erfindungsgemäßen Motorradtasche in einer perspektivischen Ansicht von schräg oben;
- Fig. 2: dasselbe Ausführungsbeispiel in der gleichen Ansicht mit aufgeklapptem Deckel;
- Fig. 3: dasselbe Ausführungsbeispiel der erfindungsgemäßen Motorradtasche mit auf ihr befestigter zweiter Motorradtasche.

Die in den Zeichnungen als ganzes mit 100 bezeichnete Motorradtasche umfasst eine Gepäckaufnahme mit einem aufklappbaren Deckel 1. Der Deckel 1 ist etwa viereckig und mit einem Rand R, über den er aufklappbar ist, einstückig mit der übrigen Motorradtasche verbunden. An der dieser Seite gegenüberliegenden Seite weist der Deckel 1 zwei in den Zeichnungen nur angedeutete Permanentmagnete 2, 2' auf. Diese stehen bei geschlossenem Deckel mit zwei gegenpolig angeordneten Permanentmagneten 2, 2', die in einer Lasche 8 vorgesehen sind, in Wirkverbindung. Die Magnete sind in der Art eines Sandwich - Aufbaus in das Material der Motorradtasche 100 eingenäht. Die Lasche 8 ragt in den durch den Deckel 1 abdeckbaren Bereich der Öffnung der Motorradtasche 100 von der Seite hinein, die der Seite gegenüberliegt, an der der Deckel 1 einstückig mit der Motorradtasche 100 verbunden ist. Die gesamte Hülle der Motorradtasche 100 ist aus dem gleichen Material hergestellt, welches eine gewisse Steifigkeit und Elastizität aufweist. Diese Steifigkeit im Bereich des Deckels 1 und des Übergangsbereiches zwischen dem Deckel 1 und der übrigen Motorradtasche 100 bewirkt, dass der geöffnete Deckel 1, nach dem er losgelassen wird, selbsttätig voll ausgebreitet in die korrekte Verschlussposition zufällt, in der er von den Permanentmagneten 2, 2' in einem ersten Verschlusszustand gehalten wird. An den beiden übrigen (gegenüberliegenden) Seiten des viereckigen Deckels 1 ist dieser nicht fest mit der Tasche 100 verbunden und es sind keine Magnete und auch keine Laschen vorgesehen. Stattdessen sind hier zwei wasserdichte Reißverschlüsse 4, 4' vorgesehen, die zum Erreichen eines endgültigen Verschlusszustandes des Deckels 1 verschließbar sind. Da der Deckel 1, wie bereits erwähnt, von selbst in die korrekte Verschlussposition fällt, in der sich die Bänder 4a, 4b; 4'a, 4'b der Reißverschlüsse 4, 4' relativ zueinander zumindest nahezu in der Verschlussposition befinden, kann dies sehr schnell und leicht geschehen, da hierfür keine weitere Justierung des Deckels 1 gegenüber der Motorradtasche 100 nötig ist. Der Deckel 1 weist zum einfacheren Öffnen eine Öffnungsschlaufe 7 auf.

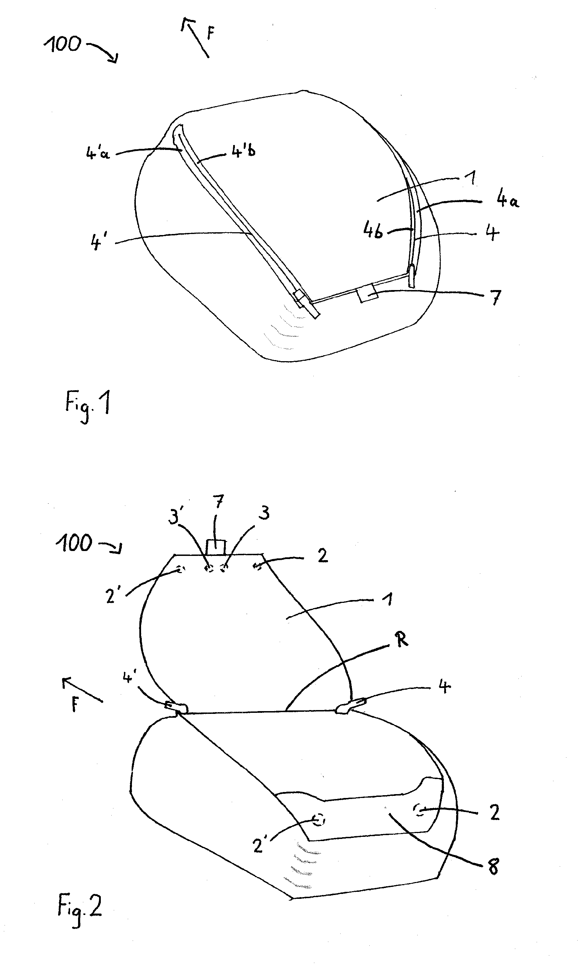

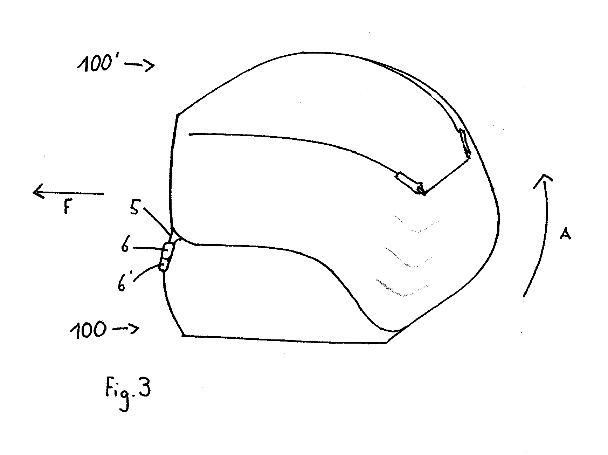

Wie in Fig. 3 dargestellt, weist die Motorradtasche 100 Befestigungsmittel für eine weitere Motorradtasche 100' auf. Diese umfassen an einer Seite der Motorradtasche 100 vorgesehene zwei Schließen 6', von denen in Fig. 3 nur eine dargestellt ist. In diese Schließen 6' sind im Wege eines Klickverschlusses komplementäre weitere Schließen 6 einführbar, die an Gurten 5 befestigt sind, die ihrerseits fest an der Tasche 100' befestigt sind. Auch von den beiden komplementären Schließen 6 ist in Fig. 3 nur eine dargestellt. Gleiches gilt für die Gurte 5. Durch die Schließen 6, 6' und die Gurte 5 kann die zweite Motorradtasche 100' sehr schnell und zuverlässig scharnierartig mit einer Seite auf der ersten Motorradtasche 100 befestigt werden. Auf der dieser gegenüberliegenden Seite weist die untere Motorradtasche 100 in Fig. 2 angedeutete Permanentmagnete 3, 3' auf. Diese werden durch das Herunterklappen der oberen Motorradtasche 100' auf die untere Tasche 100 mit entsprechenden, in den Zeichnungen nicht dargestellten, gegenpolig angeordneten Permanentmagneten in Wirkverbindung gebracht. Die zuletzt genannten Magnete sind zwischen zwei elastischen Gurten eingenäht, welche ihrerseits an der Unterseite der oberen Motorradtasche 100' angenäht sind. Durch Überwindung der magnetischen Kräfte kann die obere Tasche 100' als Ganzes wieder gegenüber der unteren Motorradtasche 100 hochgeklappt werden, wie dies mit dem Pfeil A in Fig. 3 dargestellt ist. Die Motorradtaschen 100, 100' werden so auf dem Motorrad und aufeinander montiert, dass die Magnetverschlüsse hinten, also entgegen der Fahrtrichtung angeordnet sind, die in den Zeichnungen durch den Pfeil F gekennzeichnet ist.

### Bezugszeichenliste

- 100, 100': Motorradtasche
- 1: Deckel
- 2,2': Permanentmagnet des Verschlusssystems
- 3,3': Permanentmagnet des Befestigungssystems
- 4,4': Reißverschluss
- 4a, 4b; 4'a, 4'b: Bänder
- 5: Gurt
- 6,6': Schließe
- 7: Öffnungsschlaufe
- 8: Lasche
- F: Fahrtrichtung
- A: Aufklapprichtung
- R: Rand

## Patentansprüche

1. Motorradtasche (100),
mit einem zu öffnenden Deckel (1),
und mit einem Verschlusssystem für den Deckel,
**dadurch gekennzeichnet,**
**dass** in dem Verschlusssystem magnetisch wirkende Mittel, die mit mindestens einem Reißverschluss (4) zusammenwirken, vorgesehen sind, so dass der Deckel (1) durch die magnetisch wirkenden Mittel in einen ersten Verschlusszustand bringbar ist, in welchem sich die beiden Bänder (4a, 4b; 4'a, 4'b) des mindestens einen Reißverschlusses (2) exakt oder nahezu exakt in Schließposition gegenüberliegen.

2. Motorradtasche (100) nach Anspruch 1, **dadurch gekennzeichnet, dass** an dem Deckel (1) und/oder an der Motorradtasche (100) mindestens ein Permanentmagnet (2) vorgesehen ist, welcher mit einem an der Motorradtasche (100) und/oder an dem Deckel (1) vorgesehenen ferromagnetischen Material (3) oder einem Permanentmagneten (2) umgekehrter Polung in Wirkverbindung bringbar ist.

3. Motorradtasche (100) nach Anspruch 2, **dadurch gekennzeichnet, dass** die Motorradtasche mindestens eine in den durch den Deckel (1) abdeckbaren Bereich der Motorradtasche (100) hineinragende Lasche (8) umfasst, die jeweils mindestens einen Permanentmagneten (2) oder ferromagnetisches Material (3) aufweist.

4. Motorradtasche (100) nach einem der Ansprüche 1 bis 3, **dadurch gekennzeichnet, dass** der Deckel (1) mit einem Rand scharniergelenkig mit der Motorradtasche (100) verbunden ist und über diesen Rand (R) aufklappbar ist.

5. Motorradtasche (100) nach einem der Ansprüche 1 bis 4, **dadurch gekennzeichnet, dass** Mittel zur Versteifung des Deckels (1) der Motorradtasche (100) vorgesehen sind.

6. Motorradtasche (100) nach Anspruch 5, **dadurch gekennzeichnet, dass** diese Mittel eine vollflächige Versteifung des Deckels (1) durch Verwendung eines steifen oder/und mehrlagigen Deckelmaterials umfassen.

7. Motorradtasche (100) nach Anspruch 5 oder 6, **dadurch gekennzeichnet, dass** die Mittel eine Umrahmung des Deckels (1) aus Metall oder Kunststoff umfassen.

8. Motorradtasche (100) nach einem der Ansprüche 4 bis 7, **dadurch gekennzeichnet, dass** sich das Endstück des mindestens einen Reißverschlusses (4) im Bereich des mit der Motorradtasche (100) verbundenen Randes (R) des Deckels (1) befindet.

9. Motorradtasche (100) nach einem der Ansprüche 1 bis 8, **dadurch gekennzeichnet, dass** das Verschlusssystem zwei an gegenüberliegenden Seiten des Deckels (1) angeordnete Reißverschlüsse (4,4') aufweist.

10. Motorradtasche (100) nach einem der Ansprüche 2 bis 9, **dadurch gekennzeichnet, dass** das ferromagnetische Material und der mindestens eine Permanentmagnet (2) oder nur mindestens zwei Permanentmagnete gegenüber des scharniergelenkig mit der Motorradtasche (100) verbundenen Randes (R) des Deckels (1) an diesem und an der Motorradtasche (100) angeordnet sind.

11. Motorradtasche (100) nach einem der Ansprüche 2 bis 10, **dadurch gekennzeichnet, dass** das ferromagnetische Material und/oder der mindestens eine Permanentmagnet (2) an einem Bereich des Deckels (1) und der Motorradtasche (100) vorgesehen sind, der bei ordnungsgemäßer Montage der Motorradtasche (100) auf dem Motorrad und geschlossenem Deckel (1) nahezu senkrecht ist.

12. Motorradtasche (100) nach einem der Ansprüche 1 bis 11, **dadurch gekennzeichnet, dass** ein Befestigungssystem zum übereinander Anordnen mehrerer Motorradtaschen (100, 100') vorgesehen ist, welches Mittel aufweist, die die Motorradtaschen (100, 100') an einer Seite scharnierartig miteinander befestigen.

13. Motorradtasche (100) nach Anspruch 12, **dadurch gekennzeichnet, dass** die Mittel mindestens einen Gurt (5) umfassen, der mit einem Ende an einer Motorradtasche (100) unlösbar befestigt ist und an dem anderen Ende eine Schließe (6) aufweist, die mit einer an der anderen Motorradtasche unlösbar verbundenen komplementären Schließe (6') lösbar in Eingriff zu bringen ist.

14. Motorradtasche (100) nach Anspruch 12 oder 13, **dadurch gekennzeichnet, dass** das Befestigungssystem auf der der scharnierartigen Befestigung gegenüberliegenden Seite magnetisch wirkende Mittel aufweist.

15. Motorradtasche (100) nach Anspruch 14, **dadurch gekennzeichnet, dass** die magnetischen Mittel des Befestigungssystems ferromagnetisches Material und/oder Permanentmagnete (3,3') umfassen.
